(19) Europäisches Patentamt
European Patent Office
Office européen des brevets

(11) **EP 4 082 748 B1**

(12) **EUROPÄISCHE PATENTSCHRIFT**

(45) Veröffentlichungstag und Bekanntmachung des Hinweises auf die Patenterteilung:
**06.11.2024   Patentblatt 2024/45**

(21) Anmeldenummer: **22166546.6**

(22) Anmeldetag: **04.04.2022**

(51) Internationale Patentklassifikation (IPC):
***B29C 45/76*** (2006.01)   ***B29C 45/67*** (2006.01)

(52) Gemeinsame Patentklassifikation (CPC):
**B29C 45/76; B29C 45/67; B29C 45/768;**
B29C 2945/76056; B29C 2945/76113;
B29C 2945/76214; B29C 2945/7623;
B29C 2945/76247; B29C 2945/76307;
B29C 2945/76946

(54) **VERFAHREN ZUM ÜBERWACHEN DES HYDRAULISCHEN VERSORGUNGSSYSTEMS EINER KUNSTSTOFFVERARBEITUNGSMASCHINE**

METHOD FOR MONITORING THE HYDRAULIC SUPPLY SYSTEM OF A PLASTIC PROCESSING MACHINE

PROCÉDÉ DE SURVEILLANCE DU SYSTÈME D'ALIMENTATION HYDRAULIQUE D'UNE MACHINE D'USINAGE DE MATIÈRES PLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2021   DE 102021111083**

(43) Veröffentlichungstag der Anmeldung:
**02.11.2022   Patentblatt 2022/44**

(73) Patentinhaber: **Wittmann Battenfeld GmbH 2542 Kottingbrunn (AT)**

(72) Erfinder:
• **Warta, Willibald**
  **2551 Enzesfeld (AT)**
• **Zöhling, Bernhard**
  **2751 Steinabrückl (AT)**

(74) Vertreter: **Gosdin, Carstensen & Partner Patentanwälte Partnerschaftgesellschaft mbB Adam-Stegerwald-Straße 6 97422 Schweinfurt (DE)**

(56) Entgegenhaltungen:
DE-A1- 102013 005 774     DE-C2- 3 919 823
DE-U1- 202011 002 591

EP 4 082 748 B1

**Beschreibung**

Die Erfindung betrifft ein Verfahren zum Überwachen des hydraulischen Versorgungssystems einer zumindest teilweise hydraulisch arbeitenden Kunststoffverarbeitungsmaschine, insbesondere einer Spritzgießmaschine, wobei die Maschine mindestens eine hydraulisch angetriebene Achse mit mindestens einem Kolben-Zylinder-Element aufweist, wobei das hydraulische Versorgungssystem mindestens eine angetriebene Hydraulikpumpe umfasst, mit der Hydrauliköl gefördert und in das mindestens eine Kolben-Zylinder-Element gefördert wird, um eine Bewegung der Achse vorzunehmen.

Insbesondere in hydraulisch angetriebenen Spritzgießmaschinen (im Unterschied zu elektrischen Spritzgießmaschinen werden hier die benötigten Bewegungen der Maschine durch hydraulische Kolben-Zylinder-Systeme bewerkstelligt) wird der Schwenkwinkel oder die Drehzahl der Hydraulikpumpe für Regelungszwecke verwendet. Diese Parameter sind direkte Faktoren für die Pumpenförderleistung. Daher werden zumeist im Betrieb von Spritzgießmaschinen die genannten Parameter Schwenkwinkel und Drehzahl als bestimmendes Element für die Kolbengeschwindigkeiten der Kolben-Zylinder-Systeme herangezogen, d. h. die Geschwindigkeit der Bewegung der entsprechenden hydraulischen Achse ergibt sich unter Vorgabe des Schwenkwinkels und/oder der Drehzahl der hydraulischen Pumpe.

Eine hydraulisch betriebene Spritzgießmaschine ist aus der DE 39 19 823 A1 bekannt. Diese ist mit einem Regelsystem versehen, um vorgegebene Regelgrößen, wie die Position, die Geschwindigkeit oder die Kraft der zum Einsatz kommenden Komponenten, zu regeln. Mit der dort beschriebenen Lösung wird angestrebt, die Regelung der Antriebe der Maschine mit kompakten Elementen zu bewerkstelligen, um schnell und energiearm die maßgeblichen Baugruppen zu bewegen. Die DE 20 2011 002 591 U1 offenbart eine hydraulische Antriebseinheit, mit der ein optimaler Wirkungsgrad beim Betreiben der Antriebselemente erreicht werden soll, wobei benötigte Hubvolumen von Hydraulikflüssigkeit unter möglichst geringem Energieeinsatz von Motor und Pumpe des Systems gefördert werden können.

Das eingangs Gesagte gilt vorliegend auch, wenn die Antriebe der Maschine nicht vollständig hydraulisch, sondern nur teilweise hydraulisch ausgestaltet sind. Insoweit sind hier auch Maschinen relevant, die teilweise zwar elektrisch angetrieben werden, allerdings auch mindestens eine hydraulisch angetriebene Achse aufweisen (diese können für Teilbewegungen, beispielsweise für den Auswerfer und die Düsenanlage, eingesetzt werden).

Dabei besteht das Problem, dass es durch die Alterung der Hydraulikpumpe bzw. der Kolbendichtungen zu einer Geschwindigkeits- und damit Leistungsreduktion der hydraulisch angetriebenen Achse kommen kann. In diesem Falle kommt es nachteilig beim Betrieb der Hydraulikpumpe durch nominale Werte für den Schwenkwinkel bzw. für die Drehzahl zu einer Abweichung der tatsächlichen Prozessparameter (d. h. insbesondere der Verschiebegeschwindigkeiten der hydraulischen Achsen).

Der Erfindung liegt die **Aufgabe** zugrunde, ein Verfahren der eingangs genannten Art so fortzubilden, dass es möglich ist, ohne großen Aufwand den Zustand des Hydrauliksystems zu überwachen und zeitnah mit dem Eintritt von Alterungsprozessen des Hydrauliksystems festzustellen, dass es einer Wartung desselben bedarf.

Die Lös u n g dieser Aufgabe durch die Erfindung ist dadurch gekennzeichnet, dass das Verfahren zwecks Überwachung des Alterungsprozesses oder einer internen Leckage der Hydraulikpumpe oder einer Hydraulikkomponente des Hydrauliksystems die folgenden Schritte umfasst:

   a) Vor dem Betrieb der Kunststoffverarbeitungsmaschine:

      a1) Ermittlung des nominalen Volumenstroms der Hydraulikpumpe in Abhängigkeit mindestens eines Betriebsparameters der Hydraulikpumpe und

      a2) Bestimmung der nominalen Verschiebegeschwindigkeit der hydraulisch angetriebenen Achse bei Beaufschlagung des Kolben-Zylinder-Elements mit einem vorgegebenen nominalen Volumenstrom;

   b) Im Betrieb der Kunststoffverarbeitungsmaschine:

      b1) Bei der Beaufschlagung der hydraulisch angetriebenen Achse: Messung des mindestens einen Betriebsparameters der Hydraulikpumpe sowie der tatsächlichen Verschiebegeschwindigkeit der hydraulischen Achse;

      b2) Vergleich der tatsächlichen Verschiebegeschwindigkeit (oder einer hiermit in direktem Zusammenhang stehenden Größe) mit der nominalen Verschiebegeschwindigkeit (oder einer hiermit in direktem Zusammenhang stehenden Größe), die sich bei dem mindestens einen gemäß Schritt b1) gemessenen Betriebsparameter der Hydraulikpumpe ergeben, und Speichern und/oder Ausgabe und/oder Anzeige des Ergebnisses des Vergleichs,

      wobei die Ausgabe eines Hinweises erfolgt, wenn der Vergleich gemäß Schritt b2) ergibt, dass eine über eine vorgegebene Toleranz hinausgehende Abweichung zwischen dem Ist-Volumenstrom und dem nominalen Volumenstrom oder zwischen der tatsächlichen Verschiebegeschwindigkeit und der nominalen Verschiebegeschwindigkeit ermittelt wurde.

Der genannte Schritt b2) kann dabei insbesondere die Teilschritte umfassen:

b2a) Bestimmung des für die gemessene tatsächliche Verschiebegeschwindigkeit erforderlichen Ist-Volumenstroms;

b2b) Vergleich des erforderlichen Ist-Volumenstroms mit dem nominalen Volumenstrom, der sich bei dem mindestens einen gemäß Schritt b1) gemessenen Betriebsparameter der Hydraulikpumpe ergibt, und Speichern und/oder Ausgabe und/oder Anzeige des Ergebnisses des Vergleichs.

Das Verfahren kann dabei für eine Anzahl Teilschritte der Bewegung der hydraulisch angetriebenen Achse erfolgt bzw. durchgeführt werden. Die Ergebnisse der einzelnen Teilschritte können dann aufsummiert bzw. gemittelt werden, um zur gesamten Bewegung der hydraulischen Achse zu gelangen.

Der Betriebsparameter der Hydraulikpumpe ist bevorzugt die Drehzahl derselben und/oder der Schwenkwinkel der Hydraulikpumpe.

Besonders bevorzugt ist vorgesehen, dass das Verfahren für mehrere hydraulisch angetriebene Achsen durchgeführt wird. In diesem Falle ist insbesondere vorgesehen, dass das Verfahren für mindestens zwei der folgenden hydraulisch angetriebenen Achsen durchgeführt wird: Achse zum Schließen eines Werkzeugs, Achse zur Durchführung eines Einspritzvorgangs von Kunststoffschmelze in ein Werkzeug, Achse zur Bewegung einer Einspritzdüse für Kunststoffschmelze, Achse zur Bewegung eines Auswerfers für ein gefertigtes Formteil.

Dabei hatte sich besonders bewährt, wenn die Ausgabe des Ergebnisses des Vergleichs gemäß obigem Schritt b2) separat für mehrere hydraulisch angetriebene Achsen erfolgt. In diesem Falle kann in einfacher Weise für mehrere Teile des gesamten Hydrauliksystems die Funktionsfähigkeit bzw. Effizienz geprüft werden.

Demgemäß wird hier eine Vorgehensweise zur Ermittlung des Zustandes des Hydrauliksystems der Maschine bereitgestellt.

Das vorgeschlagene Konzept stellt darauf ab, die Alterung bzw. eine interne Leckage der Pumpe oder einer Hydraulikkomponente in einfacher Weise zu erfassen. Die maßgeblichen Betriebsparameter (namentlich Schwenkwinkel und/oder Drehzahl) der Hydraulikpumpe, die den Volumenstrom der Pumpe bestimmen, werden bei jeder Bewegung einer hydraulischen Achse erfasst bzw. aufgezeichnet und in Relation zu der tatsächlichen (gemessenen) Verschiebegeschwindigkeit der hydraulischen Achse gesetzt. Insoweit wird bei der Bewegung der hydraulischen Achse eine Art Wirkungsgrad der Bewegung der Achse bestimmt.

Die Hauptbewegungen einer Spritzgießmaschine bestehen im Wesentlichen aus dem Öffnen und Schließen des Spritzgießwerkzeuges, aus der Auswerferbewegung, aus der Düsenbewegung und aus dem Spritzvorgang.

Bleibt nun beispielsweise ein so bestimmter Wirkungsgrad für die Schließbewegung konstant, ändert sich indes der Wirkungsgrad für die Bewegung der hydraulischen Achse für den Spritzvorgang, kann auf eine interne oder externe Undichtigkeit der Kolben-Zylinder-Systems für die Spritzachse geschlossen werden.

Ändert sich indes der Wirkungsgrad für beide Bewegungen (d. h. für die Schließbewegung und den Spritzvorgang), kann darauf geschlossen werden, dass ein Fehler im Pumpensystem entstanden ist.

Mit der vorgeschlagenen Bestimmung und Beobachtung der Wirkungsgrade verschiedener hydraulischer Achsen der Maschine, was bevorzugt durch eine entsprechende Software vorgenommen wird, können diverse Defekte der Hydraulikanlage schon frühzeitig erkannt werden, so dass ein rechtzeitiger Maschinenservice in die Wege geleitet werden kann. Längere Produktionsstillstände der Anlage werden dadurch verhindert. Dem Serviceteam wird durch die Anzeige der jeweiligen Wirkungsgrade der einzelnen hydraulischen Achsen die Fehlersuche erleichtert.

Zur allgemeinen Technologie betreffend die Förderleistung einer Hydraulikpumpe in Abhängigkeit deren Antriebsdrehzahl sowie des Schwenkwinkels wird auf die DE 10 2013 005 774 A1 ausdrücklich Bezug genommen.

In der Zeichnung ist ein Ausführungsbeispiel der Erfindung dargestellt.

Fig. 1     zeigt schematisch eine Spritzgießmaschinen mit vier hydraulischen Achsen,

Fig. 2     zeigt ein Beispiel für die Ermittlung des Wirkungsgrads für eine Schließbewegung der hydraulischen Achse und

Fig. 3     zeigt ein Beispiel für die Ermittlung des Wirkungsgrads für eine Spritzbewegung der hydraulischen Achse.

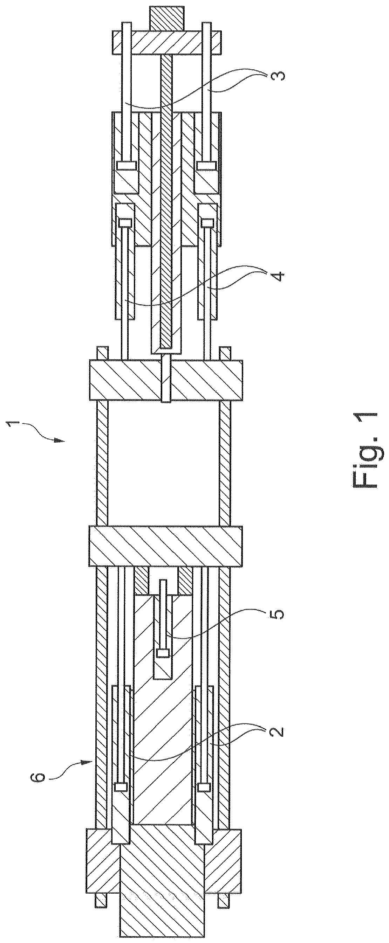

In Figur 1 ist schematisch eine Spritzgießmaschine 1 dargestellt, die hydraulisch betrieben wird, wobei mittels der Hydraulik eine Achse 2 für die Schließbewegung des Werkzeugs, eine Achse 3 für die Spritzbewegung, eine Achse 4 für die Düsenbewegung und eine Achse 5 für die Auswerferbewegung vorgesehen ist. Jede der genannten Achsen umfasst ein Kolben-Zylinder-Element, welches stellvertretend für die hydraulische Achse 2 mit dem Bezugszeichen 6 angegeben ist.

Nicht dargestellt ist ein Hydrauliksystem, welches eine Hydraulikpumpe und entsprechende hydraulische Leitungen sowie Steuer- bzw. Regelelemente umfasst, mit denen der Fluss des Hydrauliköls im System veranlasst wird.

Generell gilt, dass die Hydraulikpumpe mit einer Drehzahl n betrieben wird sowie unter einem Schwenkwinkel $\alpha$, wobei die beiden genannten Größen den Volumenstrom Q der Hydraulikpumpe definieren. Der Volumenstrom Q der Hydraulikpumpe wird also durch die Drehzahl n und/oder durch den Schwenkwinkel $\alpha$ der Hydraulikpumpe bestimmt.

Das vorgeschlagene Konzept geht von der Erkenntnis aus, dass die Fördermenge Hydrauliköl, d. h. konkret der Volumenstrom Q (in Liter/min), der Hydraulikpumpe, mit der eine hydraulische Achse 2, 3, 4, 5 der Maschine 1 versorgt wird, stets in einem direkten Verhältnis zur Verschiebegeschwindigkeit v der Achse in (mm/s) steht.

Wird von einem nominalen Volumenstrom $Q_0$ ausgegangen, der sich durch eine Messung vor Inbetriebnahme der Maschine ergibt, ergibt sich daraus eine nominale Verschiebegeschwindigkeit $v_0$ der entsprechenden hydraulischen Achse 2, 3, 4, 5 der Maschine.

Wird im Betrieb der Maschine die tatsächliche Verschiebegeschwindigkeit $v_{Ist}$ der hydraulischen Achse 2, 3, 4, 5 gemessen, kann ein Wirkungsgrad $\eta$ der hydraulischen Achse bestimmt werden. Dieser ist das Verhältnis zweier Quotienten:

$$\eta = Qu_{nom} / Qu_{Ist}$$

mit

$$Qu_{nom} = v_0/Q_0$$

als das Verhältnis des Quotienten aus nominaler Verschiebegeschwindigkeit $v_0$ zum nominalen Volumenstrom $Q_0$ (also in der Einheit [mm/s pro Liter/min]) und

$$Qu_{Ist} = v_{Ist}/Q_{Ist}$$

als das Verhältnis des Quotienten aus tatsächlicher Verschiebegeschwindigkeit $v_{Ist}$ zum Ist-Volumenstrom $Q_{Ist}$ (also in der Einheit [mm/s pro Liter/min]). Der Ist-Volumenstrom $Q_{Ist}$ ist bei den gemessenen Betriebsparametern der Hydraulikpumpe gegeben, also dem Schwenkwinkel $\alpha$ und/oder der Drehzahl n der Pumpe. Aus den gemessenen Ist-Werten für die Drehzahl und den Schwenkwinkel wird also auf den Ist-Volumenstrom $Q_{Ist}$ geschlossen bzw. dieser berechnet. Die Korrelation zwischen Volumenstrom und Drehzahl/Schwenkwinkel ergibt sich aus der initialen Bestimmung bzw. Vermessung der Pumpe.

Durch entsprechendes Messen der Ist-Geschwindigkeiten der hydraulischen Achsen auf der einen Seite und gleichzeitiges Messen der Betriebsparameter der Hydraulikpumpe (Steigungswinkel und/oder Drehzahl, woraus sich durch die initiale Bestimmung der nominale Volumenstrom $Q_0$ bestimmen lässt) kann der Wirkungsgrad $\eta$ für jede hydraulische Achse bestimmt und angezeigt werden (er liegt zwischen 0 % und 100 %). Hieraus kann unmittelbar auf einen Defekt an der Hydraulikanlage geschlossen werden, sobald der Wirkungsgrad unter einen vorgegebenen Mindestwert absinkt (zum Beispiel unter 95 %).

Ist beispielsweise der Wirkungsgrad der Spritzseite konstant auf einem hohen Niveau, fällt indes der Wirkungsgrad Schließseite unter die vorgegebene Toleranz ab, kann davon ausgegangen werden, dass das Pumpensystem sowie die Spritzachse in Ordnung sind, dass indes aber ein Defekt (beispielsweise an den Zylinderdichtungen) des Schließsystems vorliegt. Im umgekehrten Falle läge der Defekt an der Spritzachse.

Sinken alle Wirkungsgrade unter eine vorgegebene Toleranz ab, kann daraus geschlossen werden, dass ein Defekt beim Pumpensystem vorliegt.

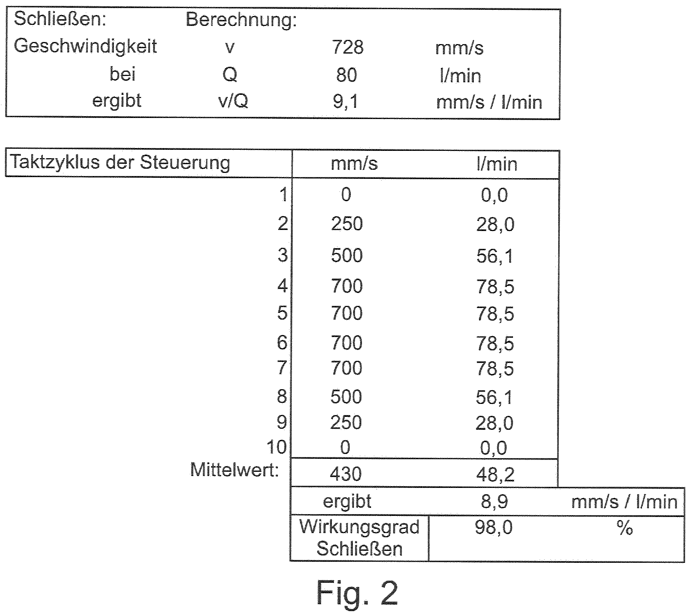

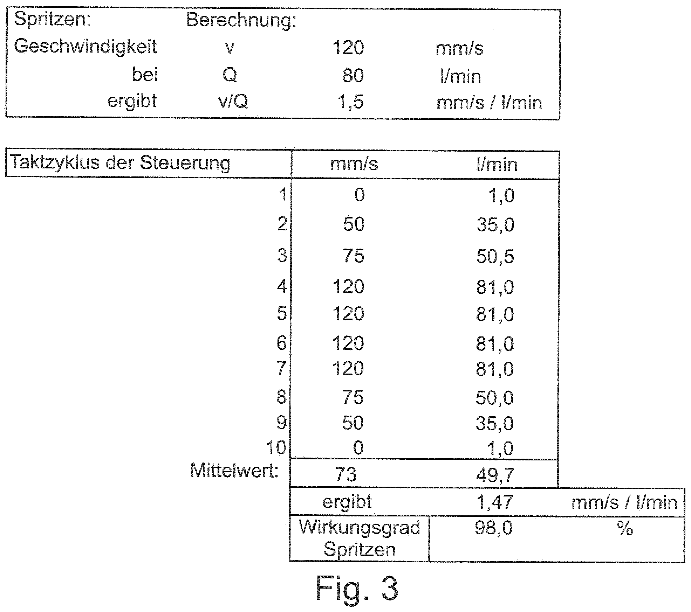

Dies ist für ein Beispiel in den Figuren 2 und 3 dargestellt:
In Figur 2 ist für die Schließbewegung des Werkzeugs der Spritzgießmaschine im oberen Bereich die initiale Bestimmung (vor dem Betrieb der Maschine) der Parameter angegeben ("Schließen: Berechnung"), während im unteren Bereich ("Taktzyklus der Steuerung") die Erfassung der Daten während des Betriebs der Maschine aufgelistet sind. Ganz unten in Figur 2 ist dann die Berechnung des Wirkungsgrades für diese hydraulische Achse angegeben.

In Figur 3 ist die analoge Darstellung für die Spritzbewegung während eines Spritzgieß-Zyklus angegeben.

Oben in den beiden Figuren ist zunächst zu sehen, dass bei einer erfassten Geschwindigkeit v (in mm/s) der hydraulischen Achse und einem Volumenstrom Q der Hydraulikpumpe ein Verhältnis v/Q berechnet werden kann (in mm/s pro Liter/min). Hierbei handelt es sich um die initiale Bestimmung der Daten vor dem eigentlichen Betrieb der Maschine. Gemäß Figur 2 wird bei einer Geschwindigkeit von 728 mm/s und einem Volumenstrom von 80 Liter/min ein Quotient der beiden Größen von 9,1 (mm/s / Liter/min) ermittelt, was sozusagen dem neuwertigen Zustand des Hydrauliksystems entspricht.

Anschließend ist für einen Taktzyklus mit insgesamt 10 Teilschritten die jeweilige Geschwindigkeit (in mm/s) sowie der jeweilige Volumenstrom (in Liter/min) angegeben; die Teilschritte werden dann zu einem Mittelwert zusammengefasst. Auch hier kann dann wieder der Quotient der mittleren Geschwindigkeit zum mittleren Volumenstrom (in Figur 2: 430 mm/s geteilt durch 48,2 Liter/min) gebildet werden, was zu einem tatsächlichen Wert im Betrieb der Spritzgießmaschine (in Figur 2: von 8,9 (mm/s / Liter/min) führt.

Zur Bestimmung des Wirkungsgrads $\eta$ wird der Quotient gebildet
In Figur 2 ergibt sich dieser zu 8,9 / 9,1 = 98 % = "Wirkungsgrad Schließen".

Analog wird gemäß Figur 3 für die Spritzbewegung der Maschine vorgegangen. Auch hier ergibt sich der "Wirkungsgrad Spritzen" als Quotient von 1,47 / 1,50 zu 98 %.

Das Ergebnis für die beispielhafte Darstellung gemäß den Figuren 2 und 3 ist also, dass sowohl für die Schließachse 2 als auch für die Spritzachse 3 Wirkungsgrade von 98 % erreicht wurden, so dass darauf geschlossen werden kann, dass sowohl die Kolben-Zylinder-Elemente für das Schließen als auch für das Spritzen in Ordnung sind, was auch für das Hydrauliksystem als solches gilt.

Fällt der Wirkungsgrad für eine der beiden hydraulischen Achsen ab, kann darauf geschlossen werden, dass das Kolben-Zylinder-Element der betreffenden Achse schadhaft geworden ist. Fallen indes beide Wirkungsgrade ab, ist die Wahrscheinlichkeit hoch, dass ein Schaden an der Hydraulikpumpe vorliegt.

Bezugszeichenliste:

1    Kunststoffverarbeitungsmaschine (Spritzgießmaschine)
2    hydraulisch angetriebene Achse (Schließbewegung)
3    hydraulisch angetriebene Achse (Spritzbewegung)
4    hydraulisch angetriebene Achse (Düsenbewegung)
5    hydraulisch angetriebene Achse (Auswerferbewegung)
6    Kolben-Zylinder-Element

$Q_0$    nominaler Volumenstrom der Hydraulikpumpe
$Q_{Ist}$    Ist-Volumenstrom der Hydraulikpumpe
n    Drehzahl der Hydraulikpumpe
$\alpha$    Schwenkwinkel der Hydraulikpumpe
$v_0$    nominale Verschiebegeschwindigkeit
$v_{Ist}$    tatsächliche Verschiebegeschwindigkeit

**Patentansprüche**

1.  Verfahren zum Überwachen des hydraulischen Versorgungssystems einer zumindest teilweise hydraulisch arbeitenden Kunststoffverarbeitungsmaschine (1), insbesondere einer Spritzgießmaschine, wobei die Maschine mindestens eine hydraulisch angetriebene Achse (2, 3, 4, 5) mit mindestens einem Kolben-Zylinder-Element (6) aufweist, wobei das hydraulische Versorgungssystem mindestens eine angetriebene Hydraulikpumpe umfasst, mit der Hydrauliköl gefördert und in das mindestens eine Kolben-Zylinder-Element (6) gefördert wird, um eine Bewegung der Achse (2, 3, 4, 5) vorzunehmen, **dadurch gekennzeichnet, dass** es zwecks Überwachung des Alterungsprozesses oder einer internen Leckage der Hydraulikpumpe oder einer Hydraulikkomponente des Hydrauliksystems die folgenden Schritte umfasst:

a) Vor dem Betrieb der Kunststoffverarbeitungsmaschine (1):

a1) Ermittlung des nominalen Volumenstroms ($Q_0$) der Hydraulikpumpe in Abhängigkeit mindestens eines Betriebsparameters (n, $\alpha$) der Hydraulikpumpe und
a2) Bestimmung der nominalen Verschiebegeschwindigkeit ($v_0$) der hydraulisch angetriebenen Achse (2, 3, 4, 5) bei Beaufschlagung des Kolben-Zylinder-Elements (6) mit einem vorgegebenen nominalen Volumenstrom ($Q_0$);

b) Im Betrieb der Kunststoffverarbeitungsmaschine (1):

b1) Bei der Beaufschlagung der hydraulisch angetriebenen Achse (2, 3, 4, 5): Messung des mindestens einen Betriebsparameters (n, $\alpha$) der Hydraulikpumpe sowie der tatsächlichen Verschiebegeschwindigkeit ($v_{Ist}$) der hydraulischen Achse (2, 3, 4, 5);
b2) Vergleich der tatsächlichen Verschiebegeschwindigkeit ($v_{Ist}$) oder einer hiermit in direktem Zusammenhang stehenden Größe mit der nominalen Verschiebegeschwindigkeit ($v_0$) oder einer hiermit in direktem Zusammenhang stehenden Größe, die sich bei dem mindestens einen gemäß Schritt b1) gemessenen Betriebsparameter (n, $\alpha$) der Hydraulikpumpe ergeben, und Speichern und/oder Ausgabe und/oder Anzeige des Ergebnisses des Vergleichs, wobei die Ausgabe eines Hinweises erfolgt, wenn der Vergleich gemäß Schritt b2) ergibt, dass eine über eine vorgegebene Toleranz hinausgehende Abweichung zwischen dem Ist-Volumenstrom ($Q_{Ist}$) und dem nominalen Volumenstrom ($Q_0$) oder zwischen der tatsächlichen Verschiebegeschwindigkeit ($v_{Ist}$) und der nominalen Verschiebegeschwindigkeit ($v_0$) ermittelt wurde.

2.  Verfahren nach Anspruch 1, **dadurch gekennzeichnet, dass** der Schritt b2) gemäß Anspruch 1 die Teilschritte umfasst:

b2a) Bestimmung des für die gemessene tatsächliche Verschiebegeschwindigkeit ($v_{Ist}$) erforderlichen Ist-Volumenstroms ($Q_{Ist}$);
b2b) Vergleich des erforderlichen Ist-Volumenstroms ($Q_{Ist}$) mit dem nominalen Volumenstrom

($Q_0$), der sich bei dem mindestens einen gemäß Schritt b1) von Anspruch 1 gemessenen Betriebsparameter (n, $\alpha$) der Hydraulikpumpe ergibt, und Speichern und/oder Ausgabe und/oder Anzeige des Ergebnisses des Vergleichs.

3. Verfahren nach Anspruch 1 oder 2, **dadurch gekennzeichnet, dass** es für eine Anzahl Teilschritte der Bewegung der hydraulisch angetriebenen Achse (2, 3, 4, 5) erfolgt.

4. Verfahren nach einem der Ansprüche 1 bis 3, **dadurch gekennzeichnet, dass** der Betriebsparameter die Drehzahl (n) der Hydraulikpumpe ist.

5. Verfahren nach einem der Ansprüche 1 bis 3, **dadurch gekennzeichnet, dass** der Betriebsparameter der Schwenkwinkel ($\alpha$) der Hydraulikpumpe ist.

6. Verfahren nach einem der Ansprüche 1 bis 5, **dadurch gekennzeichnet, dass** es für mehrere hydraulisch angetriebene Achsen (2, 3, 4, 5) durchgeführt wird.

7. Verfahren nach Anspruch 6, **dadurch gekennzeichnet, dass** es für mindestens zwei der folgenden hydraulisch angetriebenen Achsen (2, 3, 4, 5) durchgeführt wird: Achse (2) zum Schließen eines Werkzeugs, Achse (3) zur Durchführung eines Einspritzvorgangs von Kunststoffschmelze in ein Werkzeug, Achse (4) zur Bewegung einer Einspritzdüse für Kunststoffschmelze, Achse (5) zur Bewegung eines Auswerfers für ein gefertigtes Formteil.

8. Verfahren nach Anspruch 6 oder 7, **dadurch gekennzeichnet, dass** die Ausgabe des Ergebnisses des Vergleichs gemäß Schritt b2) von Anspruch 1 separat für mehrere hydraulisch angetriebene Achsen (2, 3, 4, 5) erfolgt.

**Claims**

1. Method for monitoring the hydraulic supply system of an at least partially hydraulically operating plastic processing machine (1), in particular an injection molding machine, wherein the machine has at least one hydraulically driven axis (2, 3, 4, 5) with at least one piston-cylinder element (6), wherein the hydraulic supply system comprises at least one driven hydraulic pump with which hydraulic oil is delivered and fed into the at least one piston-cylinder element (6) in order to carry out a movement of the axis (2, 3, 4, 5), **characterized in that**, in order to monitor the aging process or an internal leakage of the hydraulic pump or a hydraulic component of the hydraulic system, it comprises the following steps:

a) Prior operating the plastic processing machine (1):

a1) determination of the nominal flow rate ($Q_0$) of the hydraulic pump as a function of at least one operating parameter (n, $\alpha$) of the hydraulic pump and
a2) determination of the nominal displacement speed ($v_0$) of the hydraulically driven axis (2, 3, 4, 5) when the piston-cylinder element (6) is operated with a predetermined nominal flow rate ($Qa$);

b) During the operation of the plastic processing machine (1):

b1) When the hydraulically driven axis (2, 3, 4, 5) is operated: Measurement of the at least one operating parameter (n, $\alpha$) of the hydraulic pump as well as the actual displacement speed ($v_{Ist}$) of the hydraulic axis (2, 3, 4, 5);
b2) Comparison of the actual displacement speed ($v_{Ist}$) or a variable directly related thereto with the nominal displacement speed ($v_0$) or a variable directly related thereto, which result with the at least one operating parameter (n, $\alpha$) of the hydraulic pump measured according to step b1), and storage and/or output and/or display of the result of the comparison. wherein an indication is output if the comparison according to step b2) shows that a deviation between the actual flow rate ($Q_{Ist}$) and the nominal flow rate ($Q_0$) or between the actual displacement velocity ($v_{Ist}$) and the nominal displacement velocity ($v_0$) has been determined which exceeds a predetermined tolerance.

2. Method according to claim 1, **characterized in that** step b2) according to claim 1 comprises the substeps:

b2a) Determination of the actual flow rate ($Q_{Ist}$) required for the measured actual displacement speed ($v_{Ist}$);
b2b) Comparing the required actual flow rate ($Q_{Ist}$) with the nominal flow rate ($Q_0$) resulting from the at least one operating parameter (n, $\alpha$) of the hydraulic pump measured according to step b1) of claim 1, and storage and/or output and/or display of the result of the comparison.

3. Method according to claim 1 or 2, **characterized in that** it is carried out for a number of partial steps of the movement of the hydraulically driven axis (2, 3, 4, 5).

4. Method according to one of claims 1 to 3, **characterized in that** the operating parameter is the rotational speed (n) of the hydraulic pump.

5. Method according to one of claims 1 to 3, **characterized in that** the operating parameter is the swivel angle ($\alpha$) of the hydraulic pump.

6. Method according to one of claims 1 to 5, **characterized in that** it is carried out for several hydraulically driven axes (2, 3, 4, 5).

7. Method according to claim 6, **characterized in that** it is performed for at least two of the following hydraulically driven axes (2, 3, 4, 5): axis (2) for closing a mold, axis (3) for performing an injection operation of plastic melt into a mold, axis (4) for moving an injection nozzle for plastic melt, axis (5) for moving an ejector for a manufactured molded part.

8. Method according to claim 6 or 7, **characterized in that** the output of the result of the comparison according to step b2) of claim 1 is performed separately for several hydraulically driven axles (2, 3, 4, 5).

**Revendications**

1. Procédé de surveillance du système d'alimentation hydraulique d'une machine de traitement de matières plastiques (1) fonctionnant au moins partiellement de manière hydraulique, notamment d'une machine de moulage par injection, la machine présentant au moins un axe entraîné hydrauliquement (2, 3, 4, 5) avec au moins un élément piston-cylindre (6), le système d'alimentation hydraulique comprenant au moins une pompe hydraulique entraînée avec laquelle de l'huile hydraulique est transportée et transportée dans l'au moins un élément piston-cylindre (6) afin de procéder à un mouvement de l'axe (2, 3, 4, 5), **caractérisé en ce qu'**il comprend les étapes suivantes dans le but de surveiller le processus de vieillissement ou une fuite interne de la pompe hydraulique ou d'un composant hydraulique du système hydraulique :

a) avant le fonctionnement de la machine de traitement de matières plastiques (1) :

a1) la détermination du débit volumique nominal ($Q_0$) de la pompe hydraulique en fonction d'au moins un paramètre de fonctionnement (n, a) de la pompe hydraulique et a2) la détermination de la vitesse de déplacement nominale ($v_0$) de l'axe entraîné hydrauliquement (2, 3, 4, 5) lorsque l'élément piston-cylindre (6) est sollicité par un débit volumique nominal prédéfini ($Q_0$) ;

b) pendant le fonctionnement de la machine de traitement de matières plastiques (1) :

b1) Lors de la sollicitation de l'axe entraîné hydrauliquement (2, 3, 4, 5) : la mesure de l'au moins un paramètre de fonctionnement (n, a) de la pompe hydraulique ainsi que de la vitesse de déplacement réelle ($v_{réelle}$) de l'axe hydraulique (2, 3, 4, 5) ;
b2) la comparaison de la vitesse de déplacement réelle ($v_{réelle}$) ou d'une grandeur directement liée à celle-ci avec la vitesse de déplacement nominale ($v_0$) ou une grandeur directement liée à celle-ci, qui résultent de l'au moins un paramètre de fonctionnement (n, a) de la pompe hydraulique mesuré selon l'étape b1), et la mémorisation et/ou la sortie et/ou l'affichage du résultat de la comparaison,
la sortie d'une indication s'effectuant lorsque la comparaison selon l'étape b2) montre qu'un écart dépassant une tolérance prédéfinie a été déterminé entre le débit volumique réel ($Q_{réel}$) et le débit volumique nominal ($Q_0$) ou entre la vitesse de déplacement réelle ($v_{réelle}$) et la vitesse de déplacement nominale ($v_0$).

2. Procédé selon la revendication 1, **caractérisé en ce que** l'étape b2) selon la revendication 1 comprend les étapes partielles suivantes :

b2a) la détermination du débit réel ($Q_{réel}$) requis pour la vitesse de déplacement réelle mesurée ($v_{réelle}$) ;
b2b) la comparaison du débit réel ($Q_{réel}$) requis avec le débit nominal ($Q_0$) qui résulte de l'au moins un paramètre de fonctionnement (n, a) de la pompe hydraulique mesuré selon l'étape b1) de la revendication 1, et la mémorisation et/ou la sortie et/ou l'affichage du résultat de la comparaison.

3. Procédé selon la revendication 1 ou 2, **caractérisé en ce qu'**il est effectué pour un nombre d'étapes partielles du mouvement de l'axe entraîné hydrauliquement (2, 3, 4, 5).

4. Procédé selon l'une quelconque des revendications 1 à 3, **caractérisé en ce que** le paramètre de fonctionnement est la vitesse de rotation (n) de la pompe hydraulique.

**5.** Procédé selon l'une quelconque des revendications 1 à 3, **caractérisé en ce que** le paramètre de fonctionnement est l'angle de rotation ($\alpha$) de la pompe hydraulique.

**6.** Procédé selon l'une quelconque des revendications 1 à 5, **caractérisé en ce qu'**il est réalisé pour plusieurs axes entraînés hydrauliquement (2, 3, 4, 5).

**7.** Procédé selon la revendication 6, **caractérisé en ce qu'**il est réalisé pour au moins deux des axes entraînés hydrauliquement (2, 3, 4, 5) suivants : axe (2) de fermeture d'un moule, axe (3) de réalisation d'une opération d'injection de matière plastique fondue dans un moule, axe (4) de déplacement d'une buse d'injection de matière plastique fondue, axe (5) de déplacement d'un éjecteur de pièce moulée fabriquée.

**8.** Procédé selon la revendication 6 ou 7, **caractérisé en ce que** la sortie du résultat de la comparaison selon l'étape b2) de la revendication 1 est effectuée séparément pour plusieurs axes entraînés hydrauliquement (2, 3, 4, 5).

Fig. 1

| Schließen: | Berechnung: | | |
|---|---|---|---|
| Geschwindigkeit | v | 728 | mm/s |
| bei | Q | 80 | l/min |
| ergibt | v/Q | 9,1 | mm/s / l/min |

| Taktzyklus der Steuerung | | mm/s | l/min |
|---|---|---|---|
| | 1 | 0 | 0,0 |
| | 2 | 250 | 28,0 |
| | 3 | 500 | 56,1 |
| | 4 | 700 | 78,5 |
| | 5 | 700 | 78,5 |
| | 6 | 700 | 78,5 |
| | 7 | 700 | 78,5 |
| | 8 | 500 | 56,1 |
| | 9 | 250 | 28,0 |
| | 10 | 0 | 0,0 |
| Mittelwert: | | 430 | 48,2 |
| | ergibt | 8,9 | mm/s / l/min |
| | Wirkungsgrad Schließen | 98,0 | % |

## Fig. 2

| Spritzen: | Berechnung: | | |
|---|---|---|---|
| Geschwindigkeit | v | 120 | mm/s |
| bei | Q | 80 | l/min |
| ergibt | v/Q | 1,5 | mm/s / l/min |

| Taktzyklus der Steuerung | mm/s | l/min |
|---|---|---|
| 1 | 0 | 1,0 |
| 2 | 50 | 35,0 |
| 3 | 75 | 50,5 |
| 4 | 120 | 81,0 |
| 5 | 120 | 81,0 |
| 6 | 120 | 81,0 |
| 7 | 120 | 81,0 |
| 8 | 75 | 50,0 |
| 9 | 50 | 35,0 |
| 10 | 0 | 1,0 |
| Mittelwert: | 73 | 49,7 |
| ergibt | 1,47 | mm/s / l/min |
| Wirkungsgrad Spritzen | 98,0 | % |

## Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3919823 A1
- DE 202011002591 U1

- DE 102013005774 A1